# EUROPÄISCHE PATENTSCHRIFT

(11) **EP 0 824 770 B1**
(45) Veröffentlichungstag und Bekanntmachung des Hinweises auf die Patenterteilung: **10.07.2002**
(21) Anmeldenummer: 97905041.6
(22) Anmeldetag: 18.02.1997
(51) Int. Cl.: H01R 43/05, H02G 1/12

(54) **ABISOLIERVORRICHTUNG**
WIRE STRIPPER
DISPOSITIF DE DENUDAGE DE FILS

(30) Priorität: 01.03.1996 DE 19607949
(43) Veröffentlichungstag der Anmeldung: 25.02.1998
(73) Patentinhaber: Krampe, Franz, 59387 Ascheberg (DE)
(72) Erfinder: Krampe, Franz, 59387 Ascheberg (DE)
(74) Vertreter: Hoffmeister, Helmut, Dr. Dipl.-Phys.
(86) Internationale Anmeldenummer: EP9700753
(87) Internationale Veröffentlichungsnummer: WO9732369

(56) Entgegenhaltungen:
- WO-A-94/01906
- GB-A- 426 544

## Beschreibung

Die Erfindung betrifft eine Abisoliervorrichtung, bestehend aus wenigstens zwei pinzettenartig gehaltenen Schenkeln,
- die an ihrem einen Ende mit einer Mehrfachachse, bestehend aus wenigstens zwei Bolzenelementen verbunden sind, die in einem Zwischenelement (50) angeordnet sind, und
- die wenigstens im Bereich ihrer anderer Enden wenigstens ein Werkzeugteil aufweisen.

Eine Vorrichtung der eingangs genannten Art ist aus der DE 42 21 500 C1 bekannt. Sie besteht aus zwei Schenkeln, die durch ein Doppelgelenk miteinander verbunden sind. An dem dem Doppelgelenk gegenüberliegenden freien Ende der pinzettenartig sich gegenüberliegenden Schenkel sind die Schneiden eines Abisolierwerkzeugs angeordnet.

Diese Vorrichtung hat sich bewährt. Um allerdings die Leitungen abisolieren zu können, müssen nach dem Zusammendrücken der Schenkel solche Kräfte zum Abschieben des Isolationsschlauchs vom Leiter aufgebracht werden, daß ein einwandfreies Abisolieren der Leitungen erschwert wird und bei dünnen Querschnitten zu deren Zerstörung durch ein Zerreißen führen kann.

Aus der WO 90/10 323 A1 ist eine Abisolierzange bekannt. Sie besteht aus einem oberen und unteren Zangenschenkel, die einen Endes jeweils in einen Griff auslaufen. Im oberen Zangenschenkel ist ein Abisolationsschneidenträger gehalten, der eine Schneide eines Abisolierwerkzeugs trägt. Die andere Schneide ist am unteren Zangenschenkel angeordnet.

Nachteilig ist, daß bei einem Zusammendrücken der Griffe der Abisolierschneidenträger eine translatorische Bewegung ausführt. Das erschwert das feinfühlige Arbeiten mit dieser Zange.

Es stellt sich demnach die Aufgabe, eine Vorrichtung der eingangs genannten Art so weiter zu entwickeln, daß sie ein feinfühliges Arbeiten bei der Vorbereitung elektrischer Leiter und/oder Leitungen für eine Installation erlaubt.

Erfindungsgemäß wird diese Aufgabe durch die Merkmale des Anspruchs 1 gelöst.

Die mit der Erfindung erzielten Vorteile bestehen insbesondere darin, daß nach dem Zusammenpressen die Außenschenkel die notwendige Kraft bei der Bewegung gegeneinander aufbringen. Der zwischen den Außenschenkeln am Vielfachgelenk angelenkte Einsatzschenkel führt diese Bewegung "untersetzt" mit. Das Vielfachgelenk ist dabei wenigstens als Dreifachgelenkt ausgebildet. Zwischen einem der Außenschenkel und dem Einsatzschenkel wird der Abstand zwischen den Bolzenelementen der Außenschenkel zum Bolzenelement des Einsatzschenkels als Teilhebel. Hierdurch ist es möglich, die erforderlichen Kräfte bei der Bewegung des Einsatzschenkels feinfühlig und gezielt einzusetzen.

Der Einsatzschenkel kann auf zweierlei Art und Weise ausgebildet sein:
- Zum einen kann er als Innenschenkel und
- zum anderen als Innenschenkelkolben ausgestaltet sein.

Ist der Einsatzschenkel als Innenschenkel ausgebildet, dann ist er mit wenigstens einer Führungsausnehmung im ersten Außenschenkel an einem Führungselement geführt gehalten. Hierdurch wird gewährleistet, daß der Innenschenkel und der erste Außenschenkel bei pinzettenartigem Halten beider Schenkel und beim Aufeinanderpressen beider Außenschenkel wie ein Schenkel wirken. Wird hingegen die Schiebebewegung durchgeführt, verhalten sich beide Schenkel funktionsmäßig wie zwei unterschiedliche Teile. Kommt nur der Innenschenkel zum Einsatz kann das Vielfachgelenk als Dreifachgelenkt ausgebildet sein.

Dieses Verhalten wird beim Anbringen von Schneiden eines als Leiterabisolierwerkzeugs ausgebildeten Werkzeugteils derart ausgenutzt, daß eine Schneide mit einem davor angeordneten Greiferbacken an dem mit einem dritten Bolzenelement durchzogenen gegenüberliegenden Ende des Innenschenkels und die andere Schneide mit einem weiteren davorliegenden Greiferbacken am gegenüberliegenden Ende des zweiten Außenschenkels angeordnet ist. Hierdurch wird erreicht, daß der Innenschenkel bei einem gemeinsamen Verschieben mit den gegenüberliegenden Außenschenkeln bei einem Verschieben einen kürzeren Verschiebeweg gegenüber dem zweiten unteren Schenkel als der obere erste Schenkel gegenüber diesem vollführt. Der eigentliche Abisoliervorgang des Isolationsschlauchs vom Leiter wird dabei durch den unteren zweiten Außenschenkel und den Innenschenkel durchgeführt.

Damit die Führung der Schenkel untereinander einwandfrei durchgeführt werden kann, ist im zweiten Schenkel ein Zapfen angeordnet, der wenigstens teilweise eine gekrümmte Schenkel-Bewegungsführungsfläche aufweist. Hierzu ist im Innenschenkel eine Schenkelführungsausnehmung eingebracht, in die der Zapfen eingreifen kann.

Der Innenschenkel kann in Bezug auf seine späteren Aufgaben als ein Abisolierschenkel oder ein Isolationsabschiebschenkel ausgebildet sein. Hierzu sind beide Schenkel um eine Differenzlänge unterschiedlich lang, und zwar derart, daß der Abisolierschenkel länger als der Isolationsabschiebschenkel ist. Hierdurch wird erreicht, daß bei einer Schiebebewegung der Abisolierschenkel nach dem Durchtrennen den Isolationsschlauch vollständig von dem Leiter abschiebt. Mit dem kürzeren Isolationsabschiebschenkel wird erreicht, daß der Isolationsschlauch nach dem Durchtrennen auf dem Leiter von der Schnittstelle weggeschoben wird. Dadurch, daß das abgetrennte Stück des Isolationsschlauchs auf dem Leiter bleibt, eignet sich dieses Abtrennen besonders vorteilhaft für das Abisolieren von Litzen. Mit Hilfe des auf der Litze verbleibenden Isolationsschlauchstücks kann ein Verdrehen der Litze für eine spätere Installation vorgenommen werden. Ein Verletzen der Finger wird gegenüber dem herkömmlichen Verfahren hierdurch wirksam verhindert.

Vorteilhaft ist es, wenn eine Schenkelführungsgegenfläche des Isolierabschiebschenkels wenigstens teilweise abgeschrägt angeordnet ist. Hierdurch kann die für das Verschieben des abgetrennten Isolationsschlauchs vorgesehene Kraft-mal-Weg-Beziehung gezielt durchgeführt werden.

Ist der Einsatzschenkel als Innenschenkelkolben ausgebildet, ist er im zweiten Außenschenkel mit einem Führungskolben geführt gehalten. Hierbei wird der Führungskolben in einer Schlitzausnehmung oder dergleichen im Inneren des Außenschenkels bei einem Verschieben beider Außenschenkel untereinander zielgerichtet nach vorne bewegt. Wird nur der Innenschenkelkolben eingesetzt, kann das Vielfachgelenk als Dreifachgelenk ausgebildet sein.

Kommt hingegen ein entsprechend ausgebildeter Innenschenkel und der Innenschenkelkolben zum Einsatz, ist das Vielfachgelenk ein Vierfachgelenk. Ein so vorbereites Vierfachgelenk kann auch bei entsprechender Bestückung der Außenschenkel mit Innenschenkel oder -kolben die Funktion des Dreifachgelenks realisieren.

Der Innenschenkelkolben hält wenigstens einen Quetschstempel. Dieser ist in wenigstens eine in einer der Seitenwandungen des Außenschenkels angeordneten Quetschhülse einschiebbar. Hierdurch bildet sich ein Quetschhülsenwerkzeug aus, das für ein Anpressen von über die freien Enden der abisolierten Leitung geschobenen Hülsen verwendet werden kann. Durch die Hebeluntersetzung wird erreicht, daß dieses Anpressen ebenso wie der Abisoliervorgang feinfühlig und kraftvoll durchgeführt werden kann.

Die Quetschhülsen sind Teile einer Führungsstange. Diese Führungsstange überbrückt die Seitenwandungen des zweiten Außenschenkels. Der Innenschenkelkolben weist Führungsausnehmungen auf, von denen die Führungsstangen durchzogen sind. Fertigungstechnisch werden die Quetschhülsen so hergestellt, daß die Führungsstange ein Voll-Materialkörper mit insbesondere zylindrischer Konfiguration ist. In eines der Enden des Vollmaterials wird eine Bohrung eingebracht, die anschließend entsprechend geschlitzt ist, so daß der jeweilige Quetschstempel die in die runde Ausnehmung eingelegte Hülse an den Leiter anpressen kann.

An dem mit einem vierten Bolzenelement durchzogenen gegenüberliegenden freien Ende des Innenschenkelkolbens ist eine Bewegungsfläche angeordnet, die beweglich einem in einer der Seitenwandungen des zweiten Schenkels angeordneten Trennmesser gegenüberliegt.

Dadurch, daß die Bewegungsfläche mit Hilfe des Innenschenkelkolbens nach vorne gedrückt werden kann, bildet sie zusammen mit dem Trennmesser eine Leitungs- oder Kabelschneideinrichtung aus. Der durch das vierte Bolzenelement gehaltene Innenschenkelkolben wird bei allen seinen Arbeiten ebenso wie der Innenschenkel mit einer verzögerten Bewegung gegenüber den beiden Außenschenkeln nach vorne bewegt. Die Anordnung des vierten Bolzenelements zwischen den Bolzenelementen des ersten und zweiten Außenschenkels sorgt für eine einfühlsame und kraftvolle Bewegung des Innenschenkelkolbens.

Damit die Außenschenkel bei den jeweiligen Arbeitsbewegungen einwandfrei geführt werden können, weisen sie Grifferhebungen aus. Hierdurch bilden sich davor entsprechende Griffmulden, in die der Daumen und auf der gegenüberliegenden Seite die übrigen Finger der Hand eingreifen können.

Ein Ausführungsbeispiel der Erfindung ist in der Zeichnung dargestellt und wird im folgenden näher beschrieben. Es zeigen:
- Fig. 1: eine Abisoliervorrichtung mit einem Vierfachgelenk in einer schematischen, perspektivischen Darstellung,
- Fig. 2: eine Abisoliervorrichtung gemäß Fig. 1 in einer demontierten und auseinandergezogenen schematischen, perspektivischen Darstellung,
- Fig. 3 bis 5: eine Abisoliervorrichtung gemäß Fig. 1 in verschiedenen Arbeitsstellungen und
- Fig. 6: eine mit einem Isolationsabschiebeschenkel einer Abisoliervorrichtung bearbeitete Litze.

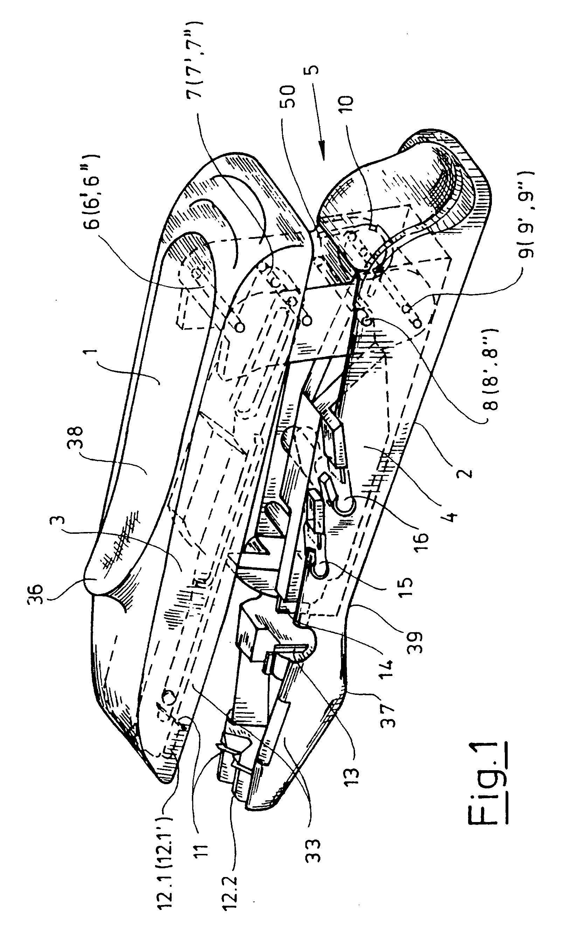

Eine Abisoliervorrichtung, wie sie Fig. 1 zeigt, besteht aus
- einem Außenschenkel 1,
- einem Außenschenkel 2,
- einem Innenschenkel 3,
- einem Innenschenkelkolben 4 und
- einem Vierfachgelenk 5.
Das Vierfachgelenk 5 wird derart ausgebildet, daß in einem Zwischenelement 50
- der Außenschenkel 1 in einem Lager 6,
- der Innenschenkel 3 in einem Lager 7,
- der Innenschenkelkolben 4 in einem Lager 5 und
- der Außenschenkel 2 in einem Lager 10
gelenkig gehalten sind.

Durch eine Feder 10, die in das Zwischenelement 50 eingelegt und gegenüber der Innenseite des Außenschenkels 2 abstützend gehalten ist, wird die pinzettenartige Grundstellung aller vier Schenkelelemente 1 bis 4 gesichert. Die Außenschenkel 1 und 2 sind als Halbschalenkörper ausgebildet, so daß sie in der Lage sind, wenigstens den Innenschenkel 3, den Innenschenkelkolben 4 und das Vierfachgelenk 5 aufzunehmen.

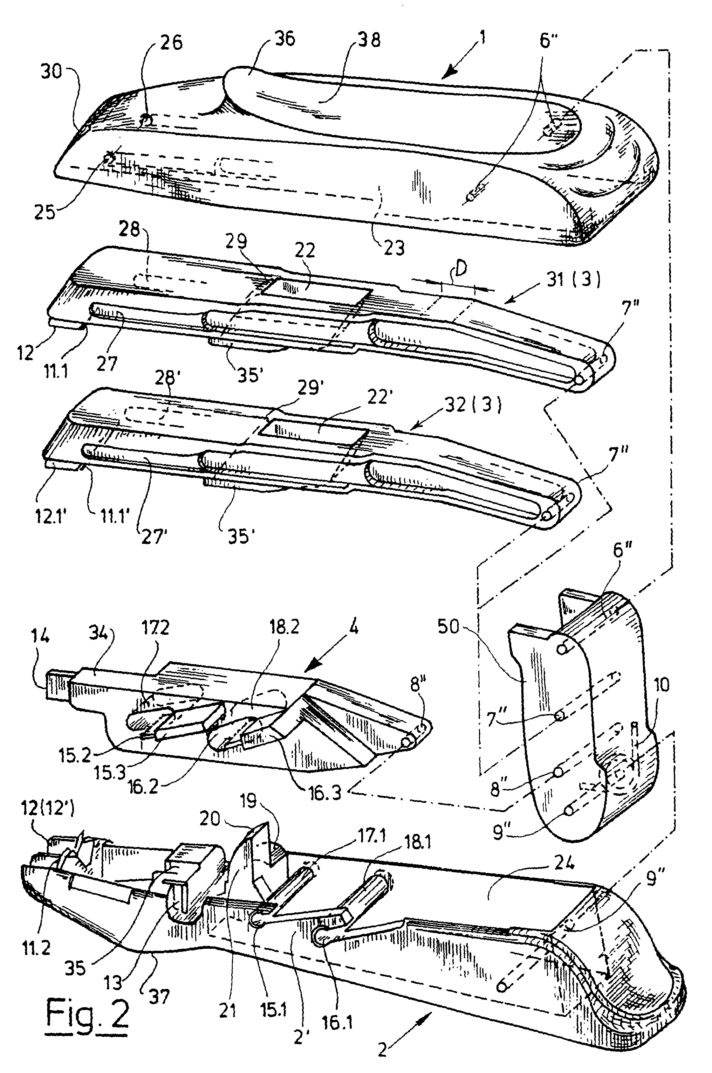

Die genannten einzelnen Teile der Abisoliervorrichtung werden anhand der Fig. 2 im einzelnen beschrieben.

Der Außenschenkel 1 ist, wie bereits beschrieben, wenigstens teilweise als Hohlschalen ausgebildet und weist im Inneren eine Außenschenkelausnehmung 23 auf. Die Schale des Außenschenkels 1 ist am vorderen Ende mit einer Innenschenkelaufnahmeausnehmung 30 versehen. Die Innenschenkelaufnahmeausnehmung 30 ist kompatibel zur Querschnittskonfiguration des Innenschenkels 3 ausgebildet. Hinter der Innenschenkelaufnahmeausnehmung 30 ist wenigstens ein ins Innere der Außenschenkelausnehmung 23 ragendes Führungselement 25, 26 angeordnet.

Das Führungselement kann als Steg, Schiene, Bolzen oder dergleichen ausgebildet sein. Auf der Außenfläche ist im vorderen Drittel eine Grifferhebung 36 angeordnet, so daß sich davor eine weich übergehende Griffmulde 38 ausbilden kann. Die Grifferhebung 36 und die Griffmulde 38 sorgen für eine gute Handhabung der Abisoliervorrichtung. Im hinteren Ende des Außenschenkels 1 sind in den Außenwandungen sich gegenüberliegend zwei Lagerausnehmungen 6" für das Lager 6 ausgebildet.

Unter dem Außenschenkel 1 sind zwei Ausführungsformen des Innenschenkels 3 als
- Abisolierschenkel 31 und
- Isolationsabschiebeschenkel 32
gezeigt.

Beide Schenkel 31 und 32 sind an ihrem vorderen Ende mit einer Schneide 11.1, 11.1' eines Leiterabisolierwerkzeugs versehen. Vor der Schneide 11.1, 11.1' ist eine Greiferbacke 12.1, 12.1' angeordnet. Hinter der Schneide 11.1, 11.1' ist im Körper der Schenkel 31, 32 wenigstens eine Führungsausnehmung 27, 28 bzw. 27', 28' ausgebildet. Die Führungsausnehmung ist als längliche Nut gestaltet. In die Führungsausnehmung 27, 28 bzw. 27', 28' greifen führend die Führungselemente 25, 26 des Außenschenkels 1 ein. Hierdurch wird der jeweilige Innenschenkel 3 im Außenschenkel 1 geführt gehalten. Etwa in der Mitte der Schenkel 31, 32 ist eine Schenkelführungsausnehmung 22, 22' angebracht. Am Ende ist der Schenkel 31, 32 von einer Lagerausnehmung 7" des Lagers 7 durchzogen. Beide Schenkel 31 und 32 sind zur Außenschenkelausnehmung 23 des Außenschenkels 1 wenigstens teilweise kompatibel.

Hinsichtlich Aufbau und Gestaltung ist also der Abisolierschenkel 31 ebenso wie der Isolationsabschiebeschenkel 32 ausgebildet. Unterschiedlich ist aber ihre Länge und zwar ist der Abisolierschenkel 31 um eine Differenzlänge D länger als der Isolationsabschiebeschenkel 32. Wie groß die Differenzlänge D ausgeführt ist, hängt von den jeweiligen Einsatzbedingungen ab. Ein weiterer Unterschied ist der, daß eine Schenkelführung-Gegenfläche 29' des Isolationsabschiebeschenkels 32 wenigstens teilweise abgeschrägt und/oder gekrümmt ausgebildet ist. Die Schenkelführung-Gegenfläche 29 des Abisolierschenkels 31 hingegen stellt lediglich eine gerade Rundung der Schenkelführungsausnehmung 22 dar.

Unter den zwei Varianten des Innenschenkels 3 ist der Innenschenkelkolben 4 dargestellt. Er ist aus einem Kunststoff gefertigt und weist einen im wesentlichen rechteckigen Querschnitt auf. Im Mittelteil sind Führungsausnehmungen in Gestalt schräggestellter Führungslanglöcher 17.2, 18.2 angebracht. Im Bereich der schräg gestellten Führungslanglöcher sind im gleichen Winkel schräg gestellte Stempelhalterungselemente 15.3, 16.3 angeordnet. In sie ist jeweils ein Quetschstempel 15.2, 16.2 eingelassen. Vorn geht der Hauptkörper des Innenschenkelkolbens 4 in einen Führungskolben 34 über. An seinem freien Ende trägt er eine Bewegungstrennfläche 14. Die Bewegungstrennfläche 14 ist aus Metall und kann entsprechend vorbehandelt sein. Ist der gesamte Innenschenkelkolben 4 im Gegensatz zu den übrigen funktionsbestimmenden Teilen der Abisoliervorrichtung aus Metall ausgebildet, ist die Bewegungstrennfläche 14 Teil des Innenschenkelkolbens 4. Ist der Innenschenkelkolben 4 bis zum Führungskolben 34 aus Kunststoff, ist die Bewegungstrennfläche 14 Teil eines eingesetzten Metallkörpers. Ebenso sind die Quetschstempel 15.2, 16.2 aus Metall und bei einem metallenen Innenschenkelkolben 4 Bestandteil dessen. Kommt hingegen Kunststoff zum Einsatz, wird in die ebenfalls aus Kunststoff geformten Stempelhalterungselemente 15.3, 16.3 der jeweilige Quetschstempel 15.2, 16.2 eingelassen. An dem der Bewegungstrennfläche 14 gegenüberliegenden Ende des Innenschenkelkolbens 4 ist eine Lagerausnehmung 8" für das Lager 8 angebracht.

Unter dem Innenschenkelkolben 4 ist der Außenschenkel 2 dargestellt.

Auch er besteht, wie bereits erwähnt, aus einer wenigstens teilweise hohlen Halbschale und weist eine Außenschenkelausnehmung 24 auf. Im vorderen Teil des Außenschenkels 2 ist eine Schneide 11.2 des Leiterabisolierwerkzeugs 11 angeordnet. Davor befindet sich eine Greiferbacke 12.2. Hinter der Schneide 11.2 kann ebenso wie an dem gegenüberliegenden Außenschenkelteil 1, insbesondere Schneide eines Abmantelwerkzeugs angebracht werden.

Dahinter ist der Außenschenkel 2 von einem Quersteg durchzogen. Hinter seiner Seitenwandung 2' ist im Außenschenkel 2 ein Trennmesser 13 angeordnet. Es bildet zusammen mit der Bewegungstrennfläche 14 des Innenschenkelkolbens 4 einen Kabelschneider. In etwa in der Mitte ist eine Führungsinnenschenkelausnehmung 35 angebracht. Ihr kompatibel ist ein Führungssteg 35', der an den Abisolierschenkel 31 bzw. den Isolationsabschiebeschenkel 32 angeordnet ist.

Hinter der Führungsschenkelausnehmung 35 ist ein Zapfen 21 angeordnet. Er weist an einer Seite eine wenigstens teilweise gekrümmte Schenkelbewegungs-Führungsfläche 20 auf. Mit der Fläche 20 fühlt der Zapfen 21 die speziell ausgebildete Schenkelführungs-Gegenfläche 29 des Isolationsabschiebeschenkels ab. Neben dem Zapfen 21 befindet sich auf gleicher Höhe eine Führungsfläche 19. Diese Führungsfläche 19 ist leicht gewölbt ausgebildet. Sie und die Führungsschenkelausnehmung 35 bildet beim Verschieben der einzelnen Schenkel untereinander Teile eines Gleitlagers und erleichtert damit die Schiebebewegung der Abisoliervorrichtung.

Hinter den Elementen 19 und 21 ist in der Seitenwandung . 2' eine schräg zeigende Ausnehmung angebracht. In diesem Bereich überbrücken die Seitenwandungen 2' Führungsstangen 17.1, 17.2. Gegenüber diesen Führungsstangen werden die Bewegungen des Innenschenkelkolbens 4 so geführt, daß die Quetschstempel 15.2, 16.2 entlang der schräg gestellten Ausnehmung verfahren werden. Die Quetschstempel 15. 2, 16.2 können in Quetschhülsen 15.1, 16.1 eingefahren werden. Die Quetschhülsen 15.1, 16.1 werden so ausgebildet, daß die aus Vollmaterial bestehenden Führungsstangen 17.1, 17.2 angebohrt und entsprechend geschlitzt werden. Der Vorteil dieser Ausgestaltung besteht darin, daß die Quetschhülsen bei einem Quetschvorgang nicht verkanten können. An dem der Schneide 11.2 gegen überliegenden Ende ist der Außenschenkel 2 von einer Lagerausnehmung 9" des Lagers 9 durchzogen. In der sich so ergebenden Außenschenkelausnehmung 24 ist der Innenschenkelkolben 4 einsetzbar.

Es sei erwähnt, daß sämtliche Teile bis auf das Leiterabisolierwerkzeug, den Kabelschneider und das Quetschwerkzeug sowie die Bolzenelemente und die Feder aus Kunststoff sind. Durch den Einsatz von Kunststoff wird eine leichte Formbarkeit der speziell ausgebildeten Teile der einzelnen Schenkel gewährleistet. Für die erwähnten Ausnahmeteile kommt für die Schneiden ein speziell gehärteter Stahl zum Einsatz. Die übrigen Metallteile können aus Eisen, Messing, Kupfer, aber auch aus Hartkunststoff bestehen.

Neben dem Innenschenkelkolben 4 ist das Zwischenelement 50 gezeigt. Es ist von der Lagerausnehmung 6", 7", 8" und 9" durchzogen. An einer der Seitenwandungen wird die Feder 10 eingelassen. Sein in den Außenschenkel 2 einsetzbares Ende ist gerundet. Das gegenüberliegende Ende geht nach einer Rundung in eine gerade Fläche über, auf der sich der Außenschenkel 1 abstützen kann. Das Zwischenelement 15 kann als Vollkörper ausgebildet sein. Im dargestellten Ausführungsbeispiel ist er als an einer Seite offener Hohlkörper realisiert.

Beim Zusammensetzen der Abisoliervorrichtung wird zuerst der Innenschenkelkolben 4 in den unteren Außenschenkel 2 montiert. Danach wird das Zwischenelement 50 in den Unterschenkel 2 zwischen dessen Seitenwandungen geschoben und in die Lagerausnehmung 9" das Bolzenelement 9 eingesetzt. Danach wird durch die Lagerausnehmung 8" der Innenschenkelkolben 4 durch Einschieben des Bolzenelemtens 8' mit dem Zwischenelement 50 verbunden.

Als nächstes wird der Außenschenkel 1 auf das Zwischenelement 50 gesetzt und durch Einschieben des Bolzenelements 6 in die Lagerausnehmung 6" mit diesem verbunden.

Da der Innenschenkel 3 in zwei Ausführungen ausgebildet ist, kann jetzt entweder der Abisolierschenkel 31 durch Einführen des Bolzenelements 7 in die Lagerausnehmung 7" mit dem Zwischenelement verbunden werden. Ist diese Verbindung als verbleibende Verbindung ausgestaltet, ist es durch die Abisoliervorrichtung möglich, ein Abisolieren von isolierten Leitungen vorzunehmen.

Anstelle des Abisolierschenkels 31 kann aber auch der Isolationsabschiebeschenkel 32 durch das Einschieben des Bolzenelements 7 in die Lagerausnehmung 7" mit dem Zwischenelement 50 verbunden werden. In dieser Ausrüstungsvariante ist es mit der Abisoliervorrichtung möglich, insbesondere als Litzen ausgeführte Leitungen für eine Installation vorzubereiten.

Um die Universalität der Abisoliervorrichtung zu erhöhen, können die Schenkel 31 und 32 wechselseitig mit dem Zwischenelement entsprechend verbunden werden.

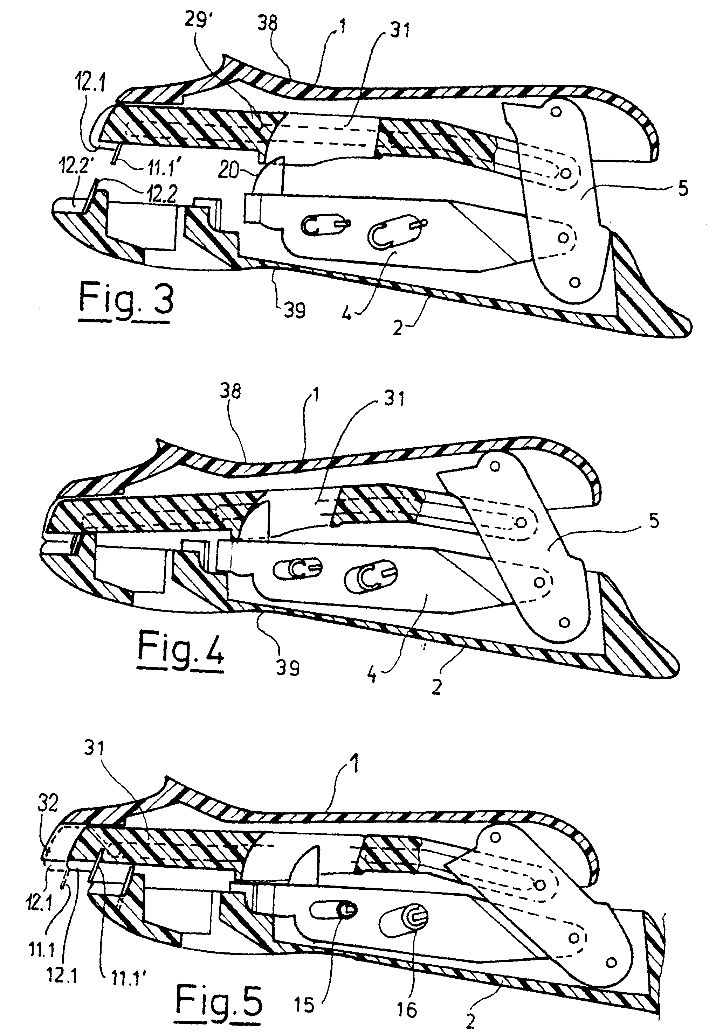

Die Funktion der Abisoliervorrichtung, wie sie sich aus dem dargestellten Ausführungsbeispiel ergibt, sei insbesondere Anhand der Fig. 3 bis 6 erläutert:

In die Abisoliervorrichtung gemäß Fig. 1 ist als Innenschenkel 3 der Isolationsabschiebeschenkel 32 eingesetzt. In der Ausgangslage, in der sich sämtliche Schenkel pinzettenartig gegenüberstehen, ragt der Isolationsabschiebeschenkel 32 mit seiner Spitze aus der Innenschenkelaufnahmeausnehmung 30 heraus. Die beiden Schneiden 11.1' und 11.2 liegen sich mit ihren davor angeordneten Greiferbacken 12.1' und 12.2 gegenüber.

Die Bewegungsfläche 14 des Innenschenkelkolbens 4 ist gegenüber dem Trennmesser 13 beabstandet, ebenso die Quetschstempel 15.2 und 16.2 gegenüber den Quetschhülsen 15.1 und 16.1 des Quetschwerkzeugs 15, 16. Die beschriebene Stellung ist darüber hinaus auch deutlich aus der Fig. 3 entnehmbar.

Werden jetzt die sich gegenüberliegenden Schenkel zusammengedrückt, berührt die Spitze der abgerundeten Schenkelbewegungs-Führungsfläche des Zapfen 21 die entsprechend vorbereitete Schenkelführungs-Gegenfläche 29'. Durch ihre Schrägstellung und leichte Abrundung werden die Messer 11.1' und 11.2 aufeinander geführt. Hierbei fällt die Schenkelbewegungs-Führungsfläche 20 in die Schenkelführungs-Gegenfläche 29' ab. Bei diesem Zusammendrücken wird ein Isolationsschlauch 41 einer Litze 40 gegenüber seiner Litzenseele 42 durchtrennt.

Die in den Griffmulden 38, 39 sicher gehaltenen Außenschenkel 1 und 2 werden durch ein Vorwärtsschieben durch ein Drücken des Daumens an der Grifferhebung 36 gegeneinander verschoben. Bei diesem Verschiebevorgang führen die beiden Außenschenkel 1, 2 einen weiteren Weg sich gegenüber als gegenüber dem dazwischenliegenden Isolationsabschiebeschenkel 32 und dem Innenschenkelkolben durch. Dadurch, daß das Lager 6 gegenüber dem Lager 9 weiter entfernt ist als diese gegenüber den dazwischen liegenden Lagern 7 bzw. 8 wird die kraftvolle Schiebebewegung der Außenschenkel gefühlvoll auf den Isolationsabschiebeschenkel 32 und den Innenschenkelkolben 4 übertragen. Die unterschiedlichen Wege der Schenkel gegeneinander wird dadurch deutlich, daß der vorher aus dem oberen Außenschenkel 1 herausragende Isolationsabschiebeschenkel 32 jetzt von diesem vollkommen aufgenommen wird. Der Verschiebevorgang des Schenkels 32 gegenüber dem Schenkel 2 wird durch das Gleitlager, das durch die Führungsfläche 19 dem nach außen geformten Führungssteg 35' geboten wird, erleichtert. Darüber hinaus sorgt der in der Führungsschenkelausnehmung 35' geführte Führungssteg 35'für eine zielgerichtete Vorwärtsbewegung des Isolationsabschiebeschenkels 32. Das geführte Verschieben des Isolationsabschiebeschenkels 32 im Außenschenkel 1 wird durch die in den Führungsausnehmungen 27', 28' gleitenden Führungselementen 25, 26 gewährleistet.

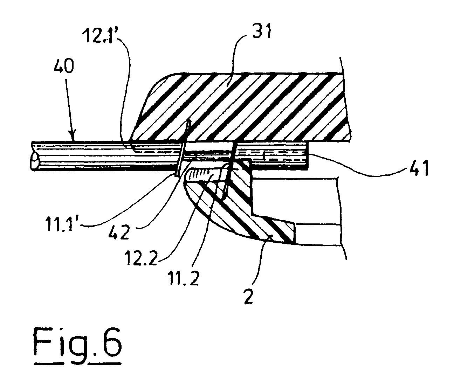

Ist der Verschiebungsendzustand erreicht, wird die Isolationshülle, wie Fig. 6 zeigt, von der Litzenseele 32 nach dem Durchtrennen gegenüber der Schnittfläche des übrigen Isolationsschlauchs um einen bestimmten Betrag der durch den Abstand vom Lager 7 bei der Schneide 11.1'festlegbar ist, verschoben. Dadurch, daß das abgeschnittene Ende des Isolationsschlauchs 41 nicht vollständig von der Litzenseele 42 abgeschoben worden ist, kann er zu einem Verdrehen der einzelnen Adern der Litze verwendet werden. Hierdurch entfällt das mitunter sehr schmerzhafte Verdrehen mit dem Daumen und dem Zeigefinger. Ist der Verdrehvorgang beendet, wird das abgeschnittene Ende des Isolationsschlauchs 41 von Hand abgezogen. Danach kann über das verdrehte Ende eine Hülle geschoben werden, die mit Hilfe des Quetschwerkzeugs 15, 16 mit diesem verbunden wird. Der Quetschvorgang wird mit einer Verschiebebewegung der Außenschenkel 1 und 2 durchgeführt. In der Endstellung, wie Fig. 5 zeigt, ragen die Quetschstempel 15.2, 16.2 so weit in die Quetschhülsen 15.1, 16.1 hinein, daß die Quetschung in gewünschter Form vorgenommen werden kann.

Mit einer Verschiebung der Außenschenkel 1 und 2 untereinander und damit auch zugleich des Innenschenkelkolbens 4 gegenüber dem Außenschenkel 2 können mit Hilfe des Trennmessers 13 und der Bewegungsfläche 14 Leitungen bzw. Kabel abgeschnitten werden.

Wird anstelle des Isolationsabschiebeschenkels 32 der Abisolierschenkel 31 eingesetzt, vollzieht sich das Bewegen der Außenschenkel 1, 2 gegenüber dem Abisolierschenkel 31 und dem Innenschenkelkolben 4 ebenso wie bereits beschrieben. Dadurch aber, daß der Abisolierschenkel 32 um die Differenzlänge D länger als der Isolationsabschiebeschenkel 32 ist, führt der Abisolierschenkel 31 einen längeren Verschiebeweg gegenüber dem unteren Außenschenkel 2 durch. Das führt dazu, daß der abgeschnittene Isolationsschlauch 41 von der Litzenseele 42 unter einem einteiligen Leiter vollständig abgeschoben wird und so für eine Installation bereitsteht.

### Bezugszeichenliste

- 1: Außenschenkel
- 2: Außenschenkel
- 2': Seitenwandung
- 3: Innenschenkel
- 4: Innenschenkelkolben
- 5: Vierfachgelenk
- 6, 7, 8, 9: Lager 6', 7', 8', 9' Bolzenelement
- 6", 7", 8", 9": Lagerausnehmung
- 10: Feder
- 11: Leiterabisolierwerkzeug
- 11.1, 11.1': Schneide des Leiterabisolierwerkzeugs
- 11.2: Schneide des Leiterabisolierwerkzeugs
- 12.1, 12.1': Greiferbacke
- 12.2: Greiferbacke
- 13: Trennmesser
- 14: Bewegungstrennfläche
- 15, 16: Quetschwerkzeug
- 15.1, 16.1: Quetschhülse
- 15.2, 16.2: Quetschstempel
- 15.3, 16.3: Stempelhalterelement
- 17.1, 18.1: Führungsstange
- 17.2, 18.2: Führungslangloch
- 19: Führungsfläche
- 20: Schenkelbewegungs-Führungsfläche
- 21: Zapfen
- 22, 22': Schenkelführungsausnehmung
- 23, 24: Außenschenkelausnehmung
- 25, 26: Führungselement
- 27, 27', 28, 28': Führungsausnehmung
- 29, 29': Schenkelführungs-Gegenfläche
- 30: Innenschenkelaufnahmeausnehmung
- 31: Isolierschenkel
- 32: Isolationsabschiebeschenkel
- 33: Abmantelungswerkzeug
- 34: Führungskolben
- 35: Führungsschenkelausnehmung
- 35': Führungssteg
- 36, 37: Grifferhebung
- 38, 39: Griffmulde
- 40: Litze
- 41: Isolationsschlauch
- 42: Litzenseele
- 50: Zwischenelement

- D: Differenzlänge

## Patentansprüche

1. Vorrichtung zur Vorbereitung elektrischer Leiter und/oder Leitungen für eine Installation, bestehend aus wenigstens zwei pinzettenartig gehaltenen Schenkeln (1, 2, 3, 4),
- die an ihrem einen Ende mit einer Mehrfachachse (6', 7', 8', 9') bestehend aus wenigstens zwei Bolzenelementen (6', 7', 8', 9') verbunden sind, die in einem Zwischenelement (50) angeordnet sind, und
- die wenigstens im Bereich ihrer anderen Enden wenigstens ein Werkzeugteil (11, 12; 13, 14; 15, 16) aufweisen,
**dadurch gekennzeichnet,**
- **daß** die Schenkel ausgebildet sind als
. zwei sich gegenüberliegende Außenschenkel (1, 2) und
. wenigstens einen Einsatzschenkel (3, 4), der in einem der Außenschenkel (1, 2) angeordnet ist und
- daß im Zwischenelement (50)
. der erste Außenschenkel (1) mit dem ersten Bolzenelement (6'),
. der zweite Außenschenkel (2) mit dem zweiten Bolzenelement (9') und
. der Einsatzschenkel (3, 4) mit wenigstens einem weiteren Bolzenelement (7', 8'), das zwischen dem ersten und dem zweiten Bolzenelement (6', 9') im Zwischenelement (50) angeordnet ist, gehalten sind,
wodurch mit einem derartig ausgebildeten Vielfachgelenk (5) beide Außenschenkel (1, 2) und der jeweils in ihnen angeordnete Einsatzschenkel (3, 4) mit ihren Werkzeugteilen (11, 12; 13, 14; 15, 16) gemeinsam aufeinander preßbar und die Außenschenkel (1, 2) untereinander und jeweils gegenüber dem Einsatzschenkel (3, 4) in eine Richtung gegeneinander unterschiedlich weit verschiebbar sind.

2. Vorrichtung nach Anspruch 1, **dadurch gekennzeichnet, daß** der Einsatzschenkel als Innenschenkel (3) ausgebildet ist.

3. Vorrichtung nach Anspruch 1 oder 2, **dadurch gekennzeichnet, daß** der Innenschenkel (3) mit wengistens einer Führungsausnehmung (27, 28; 27', 28') im ersten Außenschenkel (1) an einem Führungselement (25, 26) geführt gehalten ist.

4. Vorrichtung nach einem der Ansprüche 1 bis 3, **dadurch gekennzeichnet, daß** bei einer Ausbildung der Werkzeugteile als Schneiden (11.1, 11.1', 11.2) eines Abisolierwerkzeugs (11) die eine Schneide (11.1, 11.1') mit einem davor angeordneten Greiferbacken (12.1, 12.1') an dem mit einem dritten Bolzenelement (6') durchzogenen gegenüberliegenden Ende des Innenschenkels (3) und die andere Schneide (11.2) mit einem weiteren davor liegenden Greiferbacken (12.2) am gegenüberliegenden Ende des zweiten Außenschenkels (2) angeordnet ist.

5. Vorrichtung nach einem der Ansprüche 1 bis 4, **dadurch gekennzeichnet, daß** im zweiten Schenkel (2) ein Zapfen (21) angeordnet ist, der eine wenigstens teilweise gekrümmte Schenkel-Bewegungsfläche (20) aufweist.

6. Vorrichtung nach einem der Ansprüche 1 bis 5, **dadurch gekennzeichnet, daß** in dem Innenschenkel (3) eine Schenkelführungsausnehmung (22, 22') angebracht ist, in die der Zapfen (21) eingreift.

7. Vorrichtung nach einem der Ansprüche 1 bis 6, **dadurch gekennzeichnet, daß** der Innenschenkel (3) ein Abisolierschenkel (31) oder ein Isolationsabschiebschenkel (32) ist, die um eine Differenzlänge (D) unterschiedlich lang ausgebildet sind.

8. Vorrichtung nach einem der Ansprüche 1 bis 7, **dadurch gekennzeichnet, daß** eine Schenkelführungsgegenfläche (29) des Isolierabschiebschenkels (32) wenigstens teilweise abgeschrägt angeordnet ist.

9. Vorrichtung nach Anspruch 1, **dadurch gekennzeichnet, daß** der Einsatzschenkel als Innenschenkelkolben (4) ausgebildet ist.

10. Vorrichtung nach einem der Ansprüche 1 bis 9, **dadurch gekennzeichnet, daß** der Innenschenkelkolben (4) im zweiten Außenschenkel (2) mit einem Führungskolben (34) geführt gehalten ist.

11. Vorrichtung nach einem der Ansprüche 1 bis 10, **dadurch gekennzeichnet, daß** im Innenschenkelkolben (4) wenigstens ein Quetschstempel (15.2, 16.2) gehalten ist, der in wenigstens eine in eine der Seitenwandungen (2') des zweiten Außenschenkels (2) angeordneten Quetschhülse (15.1, 15.2) einschiebbar ist.

12. Vorrichtung nach einem der Ansprüche 1 bis 11, **dadurch gekennzeichnet, daß** die Quetschhülse (15.1, 15.2) Teil einer die Seitenwandungen (2') überbrückenden Führungsstange (17.1, 18.1) ist, mit der der Innenschenkelkolben (4) in einer in ihm angebrachten Führungsausnehmung (Langloch 17.2, 18.2) verschiebbar ist.

13. Vorrichtung nach einem der Ansprüche 1 bis 12, **dadurch gekennzeichnet, daß** an dem mit einem Kerbenbolzenelement (8') durchzogenen gegenüberliegenden freien Ende (Führungskolben 34) des Führungskolbenseine Bewegungsfläche (14) angeordnet ist, die beweglich einem in einer der Seitenwandungen (2') des zweiten Schenkels (2) angeordneten Trennmesser (13) gegenüberliegt.

14. Vorrichtung nach einem der Ansprüche 1 bis 13, **dadurch gekennzeichnet, daß** wenigstens einer der Außenschenkel (1, 2) eine Grifferhebung (36, 37) aufweist.

## Claims

1. A device for preparing electric conductors and/or wires for an installation, comprising at least two arms (1, 2, 3, 4) held like pincers,
- connected at one end to a multiple shaft (6', 7', 8', 9') comprising at least two pin elements (6', 7', 8', 9') disposed in an intermediate element (50) and
- comprising at least one tool part (11, 12; 13, 14; 15, 16) near their other end,
**characterised in that**
- the arms are in the form of
. two opposite outer arms (1, 2) and
. at least one inserted arm (3, 4) disposed in one of the outer arms (1, 2) and
- in the intermediate element (50)
. the first outer arm (1) is held by the first pin element (6'),
. the second outer arm (2) is held by the second pin element (9') and
. the inserted arm (3, 4) is held by at least one additional pin element (7', 8') disposed between the first and the second pin element (6', 9') in the intermediate element (50),
and by means of the resulting multiple joint (5) the two outer arms (1, 2) and the inserted arm (3, 4) disposed in them together with their tool parts (11, 12; 13, 14; 15, 16) can be pressed against one another and the outer arms (1, 2) are movable a varying distance in one direction relative to one another and in each case relative to the inserted arm (3, 4).

2. A device according to claim 1, **characterised in that** the inserted arm is in the form of an inner arm (3).

3. A device according to claim 1 or 2, **characterised in that** the inner arm (3) is guided on a guide element (25, 26) via at least one guide recess (27, 28; 27', 28') in the first outer arm (1).

4. A device according to any of claims 1 to 3, **characterised in that** when the tool parts are constructed as cutting edges (11.1, 11.1', 11.2) of a stripping tool (11), one cutting edge (11.1, 11.1') and a gripper jaw (12.1, 12.1') in front of it are disposed on the opposite end of the inner arm (3) through which a third pin element (6') extends, and the other cutting edge (11.2) and an additional gripper jaw (12.2) in front of it are disposed on the opposite end of the second outer arm (2).

5. A device according to any of claims 1 to 4, **characterised in that** a lug (21) is disposed in the second arm (2) and has an at least partly curved surface (20) over which the arms move.

6. A device according to any of claims 1 to 5, **characterised in that** an arm-guiding recess (22, 22') in which the lug (21) engages is formed in the inner arm (3).

7. A device according to any of claims 1 to 6, **characterised in that** the inner arm (3) is a stripping arm (31) or an insulation-pushing arm (32) the two arms differing in length by a differential length (D).

8. A device according to any of claims 1 to 7, **characterised in that** an arm-guiding co-operating surface (29) of the insulation-pushing arm (32) is at least partly inclined.

9. A device according to claim 1, **characterised in that** the inserted arm is constructed as an inner-arm piston (4).

10. A device according to any of claims 1 to 9, **characterised in that** the inner-arm piston (4) is held in the second outer arm (2) and guided by a guide piston (34).

11. A device according to any of claims 1 to 10, **characterised in that** the inner-arm piston (4) contains at least one compression punch (15.2, 16.2) for insertion into at least one compression sleeve (15.1, 15.2) disposed in one of the side walls (2') of the second outer arm (2).

12. A device according to any of claims 1 to 11, **characterised in that** the compression sleeve (15.1, 15.2) is part of a guide rod (17.1, 18.1) which bridges the side walls (2') and is adapted to move the inner-arm piston (4) in a guide recess (slot 17.2, 18.2) formed therein.

13. A device according to any of claims 1 to 12, **characterised in that** a moving surface (14) is disposed at the opposite free end (guide piston 34) of the guide piston through which a notched pin element (8') extends, and is movably disposed opposite a cutting knife (13) disposed in one of the side walls (2') of the second arm (2).

14. A device according to any of claims 1 to 13, **characterised in that** at least one of the outer arms (1, 2) has a raised handle (36, 37).

## Revendications

1. Dispositif de préparation de conducteurs et/ou ou de lignes électriques pour une installation, qui se compose d'au moins deux branches (1, 2, 3, 4) tenues à la manière de brucelles,
- qui sont connectées par leur première extrémité à un axe multiple (6', 7', 8', 9') qui se compose d'au moins deux éléments de pivots (6', 7', 8', 9') qui sont agencés dans un élément intermédiaire (50) et
- qui comportent au moins au moins un élément d'outil (11, 12; 13, 14; 15, 16) dans la zone de leurs autres extrémités,
**caractérisé en ce que**
la configuration des branches comprend:
. deux branches externes opposées (1, 2), et
. au moins une branche d'insert (3, 4) qui est agencée dans l'une des branches externes (1, 2) et **en ce que**
- ces éléments sont tenus dans l'élément intermédiaire (50) de la façon suivante:
. la première branche externe (1) est tenue par le premier élément de pivot (6'),
. la deuxième branche externe (2) est tenue par le deuxième élément de pivot (9') et
. la branche interne d'insert (3, 4) est tenue par au moins un autre élément de pivot (7', 8') qui est agencé dans l'élément intermédiaire (50) entre le premier et le deuxième éléments de pivots (6', 9'), et
de sorte que
les deux branches externes (1, 2) et la branche d'insert (3,4) respectivement agencée entre elles de l'articulation multiple (5) ainsi configurée, comportant leurs éléments d'outils (11, 12; 13, 14; 15, 16), peuvent être comprimées les unes vers les autres, et les branches externes (1, 2) et la branche d'insert (3, 4) peuvent coulisser dans une direction, réciproquement et respectivement par rapport à la branche interne, à des distances différentes pour l'une et l'autre.

2. Dispositif selon la revendication 1, **caractérisé en ce que** la branche d'insert est configurée comme branche interne (3).

3. Dispositif selon la revendication 1 ou 2, **caractérisé en ce que** la branche interne (3) est maintenue dans la première branche externe (1) sur un élément de guidage (25, 26) en étant guidée au moyen d'au moins un évidement de guidage (27, 28; 27', 28').

4. Dispositif selon l'une quelconque des revendications 1 à 3, **caractérisé en ce que**, lorsque les éléments d'outils consistent en tranchants (11.1, 11.1', 11.2) d'un outil de dénudation (11), le premier tranchant (11.1, 11.1') pourvu d'une mâchoire (12.1, 12.1') de pince située devant lui est agencé à l'extrémité opposée, traversée par un troisième élément de pivot (6'), de la branche interne (3) et l'autre tranchant (11.2) pourvu d'une autre mâchoire (12.2) de pince située devant lui est agencé sur l'extrémité opposée de la deuxième branche externe (2).

5. Dispositif selon une quelconque des revendications 1 à 4, **caractérisé en ce qu'**un tourillon (21), qui comporte une surface (20) au moins partiellement incurvée de déplacement de branche est agencé dans la deuxième branche (2).

6. Dispositif selon l'une quelconque des revendications 1 à 5, **caractérisé en ce qu'**un évidement de guidage (22, 22') de branche, dans lequel pénètre le tourillon (21), est ménagé dans la branche interne (3).

7. Dispositif selon l'une quelconque des revendications 1 à 6, **caractérisé en ce que** la branche interne (3) est, soit une branche de dénudation (31); soit une branche (32) de recul d'isolant dont les configurations diffèrent, en longueur, d'une longueur différentielle (D).

8. Dispositif selon l'une quelconque des revendications 1 à 7, **caractérisé en ce qu'**une contre-surface de guidage (29) de branche de la branche (32) de recul d'isolant est au moins en partie biseautée.

9. Dispositif selon la revendication 1, **caractérisé en ce que** la branche d'insert consiste en un piston (4) de branche interne.

10. Dispositif selon l'une quelconque des revendications 1 à 9, **caractérisé en ce que** le piston (4) de branche interne est tenu guidé, dans la deuxième branche externe (2), à l'aide d'un piston de guidage (34).

11. Dispositif selon l'une quelconque des revendications 1 à 10, **caractérisé en ce qu'**au moins un poinçon de pincement (15.2, 16.2) qui peut coulisser dans au moins une douille de pincement (15.1, 16.1) agencée dans l'une des parois latérales (2') de la deuxième branche externe (2) est tenu dans le piston (4) de branche interne.

12. Dispositif selon l'une quelconque des revendications 1 à 11, **caractérisé en ce que** la douille de pincement (15.1, 16.1) fait partie d'une tige de guidage (17.1, 18.1) qui forme un pont entre les parties hautes des parois latérales (2') et au moyen de laquelle le piston (4) de branche interne peut coulisser dans un évidement de guidage (orifice allongé 17.2, 18.2) qui y est ménagé.

13. Dispositif selon l'une quelconque des revendications 1 à 12, **caractérisé en ce qu'**une surface de déplacement (14) qui fait face en étant mobile à un couteau séparateur (13) agencé dans l'une des parois latérales (2') de la deuxième branche (2) est agencée à l'extrémité libre opposée (piston de guidage 34) du piston de guidage, traversée par un élément de pivot (8') entaillé.

14. Dispositif selon l'une quelconque des revendications 1 à 13, **caractérisé en ce qu'**au moins l'une des branches externes (1, 2) comporte une surélévation de saisie (36, 37).
